# EUROPÄISCHE PATENTSCHRIFT

(11) **EP 2 130 747 B1**
(45) Veröffentlichungstag und Bekanntmachung des Hinweises auf die Patenterteilung: **20.06.2012**
(21) Anmeldenummer: 09155255.4
(22) Anmeldetag: 16.03.2009
(51) Int. Cl.: B62D 25/18, B62D 63/04

(54) **Halteeinrichtung für ein Fahrzeuganbauteil**
Mounting device for a vehicle mounted part
Dispositif de retenue pour un composant de véhicule

(30) Priorität: 06.06.2008 DE 102008027291
(43) Veröffentlichungstag der Anmeldung: 09.12.2009
(73) Patentinhaber: J. Eberspächer GmbH & Co. KG, 73730 Esslingen (DE)
(72) Erfinder: Krause, Michael, 73095, Albershausen (DE); Wieland, Arthur, 72631, Aichtal (DE)
(74) Vertreter: BRP Renaud & Partner

(56) Entgegenhaltungen:
- EP-A2- 1 182 079
- WO-A1-2004/113110
- AT-U1- 10 843
- DE-A1-102006 021 710
- DE-U1-202006 000 667

## Beschreibung

Die vorliegende Erfindung betrifft eine Halteeinrichtung zum Befestigen eines Anbauteils an einem Tragrahmen eines Fahrzeugs, insbesondere eines Nutzfahrzeugs.

Bei Fahrzeugen, insbesondere bei Nutzfahrzeugen, ist es erforderlich, eine Vielzahl unterschiedlicher Anbauteile an einen Tragrahmen des Fahrzeugs zu befestigen. Typische Anbauteile sind Abgasbehandlungseinrichtungen, wie zum Beispiel Schalldämpfer, Katalysatoren, Partikelfilter sowie Module mit beliebigen Kombinationen derartiger Einrichtungen. Um gleichartige Anbauteile an verschiedenen Fahrzeugen befestigen zu können, werden bislang individuelle Befestigungslösungen verwendet. Dies ist mit vergleichsweise hohen Kosten verbunden.

Eine gattungsgemäße Halteeinrichtung zum Betestigen eines Anbauteils an einen Tragrahmen eines Fahrgengs is in der DE 10 2006 0217 10 A1 offenbart.

Die vorliegende Erfindung beschäftigt sich mit dem Problem, für das Befestigen eines Anbauteils an einem Fahrzeug-Tragrahmen eine verbesserte Ausführungsform anzugeben, die sich insbesondere dadurch auszeichnet, dass die Anbringung gleichartiger Anbauteile an verschiedenen Fahrzeugen mit reduzierten Kosten realisierbar ist.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, zum Befestigen eines Anbauteils an einem Tragrahmen eines Fahrzeugs eine Halteeinrichtung bereitzustellen, die tragrahmenseitige Halteelemente und anbauteilseitige Halteelemente aufweist, die einerseits über eine definierte Schnittstelle einfach aneinander festlegbar sind und die andererseits an unterschiedlichen Positionen am Fahrzeug bzw. am Anbauteil befestigt werden können. Die Adaption an unterschiedliche Fahrzeuge kann somit durch eine individuell angepasste Montage der tragrahmenseitigen Halteelemente erfolgen, wobei eine entsprechende Adaption auch auf der Seite der anbauteilseitigen Halteelemente durchführbar ist. Über die Schnittstelle lassen sich dann die anbauteilseitigen Halteelemente mit daran befestigtem Anbauteil am Tragrahmen bzw. an den daran befestigten tragrahmenseitigen Halteelementen anbringen. Durch die vorgeschlagene Halteeinrichtung kann für unterschiedliche Kombinationen von Anbauteilen und Tragrahmen stets die gleiche Halteeinrichtung zum Befestigen des Anbauteils am Tragrahmen verwendet werden. Die Kosten für die Anbauteilbefestigung können dadurch reduziert werden.

Erfindungsgemäß umfasst eine derartige Halteeinrichtung als tragrahmenseitige Halteelemente eine obere Konsole, die im montierten Zustand der Halteeinrichtung am Tragrahmen befestigt ist, sowie eine untere Konsole, die im montierten Zustand unterhalb der oberen Konsole am Tragrahmen befestigt ist. Zumindest die obere Konsole ist mit einer Hakenaufnahme ausgestattet, in die ein Haken von oben einhängbar ist. Zumindest die untere Konsole ist mit einer Plattenaufnahme ausgestattet, in die eine Fixierplatte von oben einführbar ist. Die anbauteilseitigen Halteelemente umfassen einen Halter, der im montierten Zustand am Anbauteil befestigt ist und der einen zur Hakenaufnahme der oberen Konsole passenden Haken sowie eine zur Plattenaufnahme der unteren Konsole passende Fixierplatte aufweist. Die Hakenaufnahme und die Plattenaufnahme der Konsolen bilden zusammen mit dem Haken und der Fixierplatte des Halters eine Schnittstelle, die den Halter mit daran angebrachtem Anbauteil formschlüssig an den Konsolen und somit an dem mit den Konsolen ausgestatteten Tragrahmen festlegt. Durch die Verwendung von zwei getrennten Konsolen, die hinsichtlich ihres Abstands variabel am Tragrahmen befestigbar sind, lassen sie sich besonders einfach an unterschiedlich dimensionierten Tragrahmen befestigen. Gleichzeitig kann über den Haken und die Fixierplatte des Halters stets eine formschlüssige Fixierung des Anbauteils am Tragrahmen realisiert werden.

Entsprechend einer vorteilhaften Ausführungsform kann der Haken an einem der oberen Konsole zugewandten Ende einen Plattenabschnitt aufweisen, wobei die obere Konsole an einer vom Halter abgewandten Seite der Hakenaufnahme eine komplementär zum Plattenabschnitt geformte Plattenaufnahme aufweist, in welche der Plattenabschnitt von oben einführbar ist. Haken, Plattenabschnitt, Hakenaufnahme und Plattenaufnahme sind dabei so aufeinander abgestimmt, dass beim Einhängen des Hakens in die Hakenaufnahme gleichzeitig der Plattenabschnitt in die Plattenaufnahme eingeführt wird, wobei zwischen der Plattenaufnahme und dem darin eingeführten Plattenabschnitt ein Formschluss entsteht, der den Plattenabschnitt quer zur Einführrichtung in der Plattenaufnahme sichert. Auf diese Weise kann die formschlüssige Festlegung des Halters an der oberen Konsole verbessert werden.

Gemäß einer besonders vorteilhaften Weiterbildung können die Fixierplatte und der Plattenabschnitt im Wesentlichen deckungsgleich geformt sein. In der Folge sind die zur Fixierplatte bzw. zum Plattenabschnitt komplementären Plattenaufnahmen der oberen Konsole und der unteren Konsole in entsprechender Weise deckungsgleich ausgestaltet. Diese Bauweise ermöglicht es insbesondere, die beiden Konsolen baugleich auszugestalten, was die Herstellungskosten für die Konsolen und somit für die Halteeinrichtung reduziert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, teilweise geschnittene Ansicht eines Kraft- fahrzeugs mit daran befestigtem Anbauteil,
- Fig. 2 und 3: Ansichten wie in Fig. 1, jedoch im Bereich einer Halteeinrichtung, bei verschiedenen Ausführungsformen,
- Fig. 4: eine Frontansicht der Halteeinrichtung,
- Fig. 5: eine Seitenansicht der Halteeinrichtung,
- Fig. 6: eine Seitenansicht eines Halters,
- Fig. 7: eine Frontansicht des Halters,
- Fig. 8: eine perspektivische Ansicht des Halters,
- Fig. 9: eine Seitenansicht einer Konsole,
- Fig. 10: eine Frontansicht der Konsole,
- Fig. 11: eine Draufsicht der Konsole.

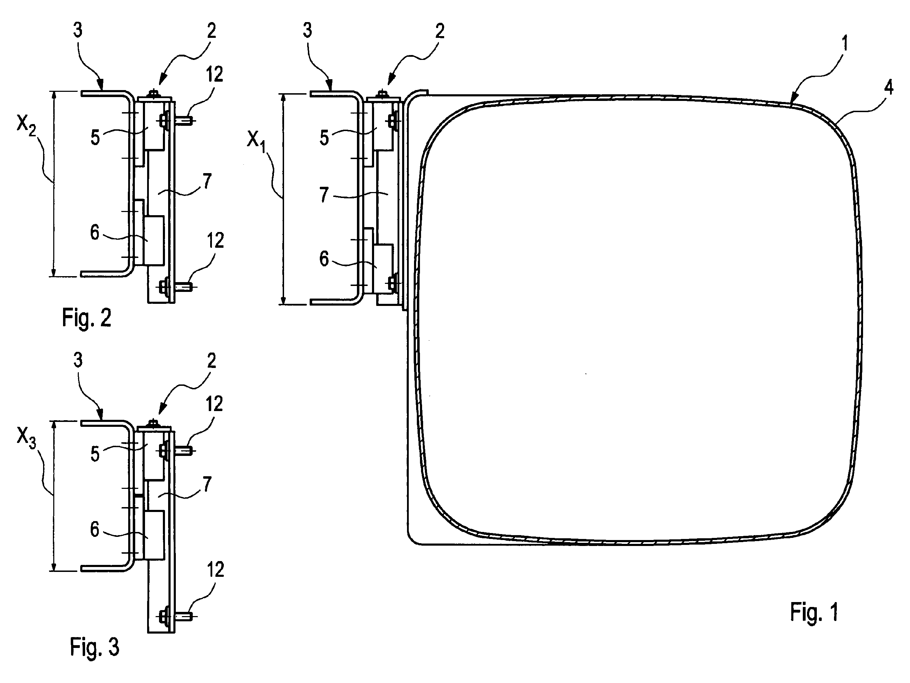

Entsprechend Fig. 1 kann ein Anbauteil 1 mit Hilfe einer Halteeinrichtung 2 an einem Tragrahmen 3 eines im Übrigen nicht dargestellten Fahrzeugs befestigt werden. Beim Anbauteil 1 handelt es sich beispielsweise um einen Kraftstofftank oder um eine Abgasbehandlungseinrichtung. Beispielsweise enthält das Anbauteil 1 in einem Gehäuse 4 zumindest einen Schalldämpfer oder zumindest ein Katalysatorelement oder zumindest ein Partikelfilterelement oder eine beliebige Kombination der vorgenannten Komponenten. Insbesondere sind komplexe Abgasbehandlungsmodule denkbar, die beispielsweise eine Einspritzeinrichtung für ein Reduktionsmittel oder für Kraftstoff in Verbindung mit anderen Abgasbehandlungselementen umfassen. Beim Fahrzeug handelt es sich bevorzugt um ein Nutzfahrzeug. Der Tragrahmen 3 kann bei unterschiedlichen Nutzfahrzeugen entsprechend den Fig. 1 - 3 unterschiedliche Höhen X₁, X₂, X₃ aufweisen. Die Halteeinrichtung 2 kann an diese unterschiedlichen Höhen X einfach adaptiert werden. Es ist klar, dass zum Befestigen des Anbauteils 1 am Tragrahmen 3 auch mehrere derartige Halteeinrichtungen 2 zum Einsatz kommen können.

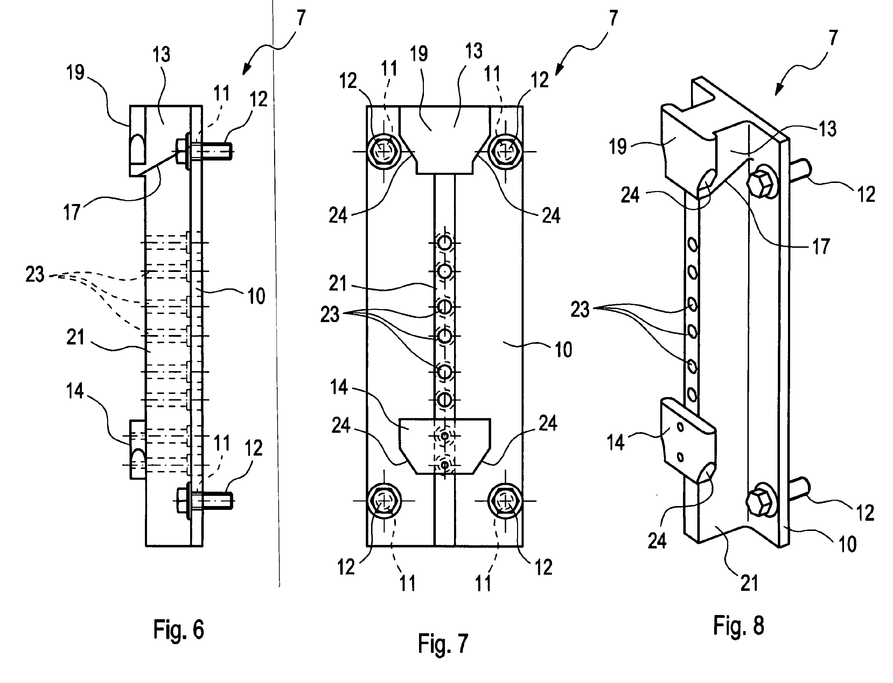

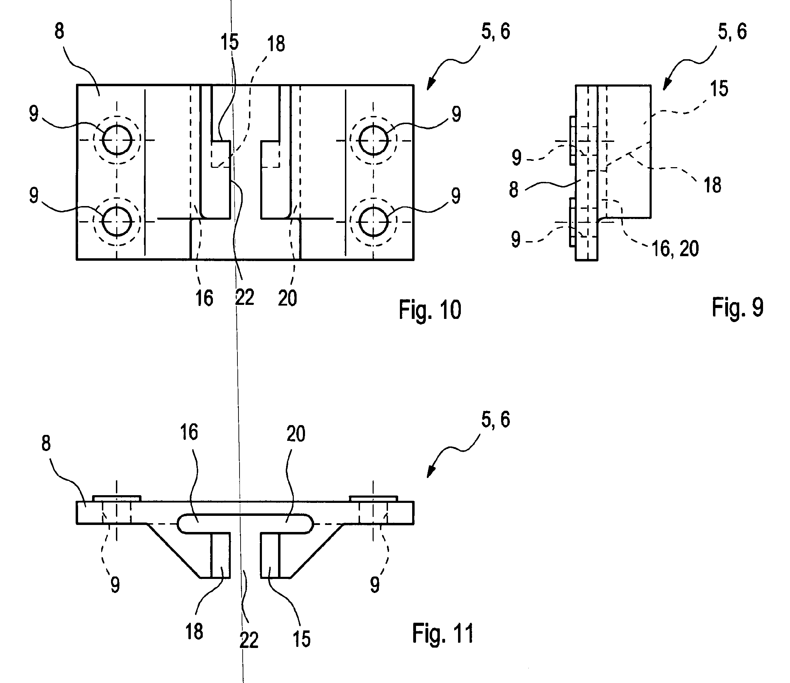

Die Halteeinrichtung 2 umfasst entsprechend den Fig. 1 - 11 eine obere Konsole 5, eine untere Konsole 6 sowie einen Halter 7. Die obere Konsole 5 ist im montierten Zustand der Halteeinrichtung 2 am Tragrahmen 3 befestigt. Hierzu weist die obere Konsole 5 beispielsweise eine Konsolenplatte 8 auf, die Schrauböffnungen 9 enthält, die eine Verschraubung der oberen Konsole 5 mit dem Tragrahmen 3 ermöglichen. Die untere Konsole 6 ist im montierten Zustand der Halteeinrichtung 2 ebenfalls am Tragrahmen 3 befestigt, und zwar vertikal unterhalb der oberen Konsole 5. Hierzu kann auch die untere Konsole 6 zweckmäßig mit einer Konsolenplatte 8 ausgestattet sein, die Schrauböffnungen 9 enthält, durch die Befestigungsschrauben hindurchführbar sind, um eine Verschraubung der unteren Konsole 6 mit dem Tragrahmen 3 zu realisieren. Der Halter 7 ist im montierten Zustand der Halteeinrichtung 2 am Anbauteil 1 befestigt. Hierzu kann der Halter 7 eine Halterplatte 10 aufweisen, die mit mehreren Schrauböffnungen 11 ausgestattet ist, die eine Verschraubung des Halters 7 mit dem Anbauteil 1 ermöglichen. Entsprechende Schrauben sind in den Figuren mit 12 bezeichnet. Der Halter 7 weist einen Haken 13 sowie eine Fixierplatte 14 auf. Im dargestellten Beispiel ist zwischen dem Haken 13 und der Fixierplatte 14 ein vertikaler Abstand vorgesehen.

Die obere Konsole 5 weist eine Hakenaufnahme 15 auf, die komplementär zum Haken 13 geformt ist, derart, dass der Haken 13 von oben in die Hakenaufnahme 15 einhängbar ist. Die untere Konsole 6 weist eine Plattenaufnahme 16 auf, die komplementär zur Fixierplatte 14 geformt ist, derart, dass die Fixierplatte 14 von oben in die Plattenaufnahme 16 einführbar ist. Dabei sind die Fixierplatte 14 und die Plattenaufnahme 16 so aufeinander abgestimmt, dass die in die Plattenaufnahme 16 eingeführte Fixierplatte 14 durch einen Formschluss quer zur Einführrichtung in der Plattenaufnahme 16 gesichert ist.

Um das Anbauen des Halters 7 an den Konsolen 5, 6 zu erleichtern, weist der Haken 13 an seiner Unterseite eine Einführschräge 17 auf. Diese ist dabei so orientiert, dass sie den Haken 13 beim Einhängen in die Hakenaufnahme 15 gegen die obere Konsole 5 antreibt. Komplementär dazu kann die Hakenaufnahme 15 mit einer Rampe 18 ausgestattet sein, was die Funktionalität der Einführschräge unterstützt.

Beim gezeigten Beispiel ist der Haken 13 außerdem an einem der oberen Konsole 5 zugewandten Ende mit einem Plattenabschnitt 19 ausgestattet. Komplementär dazu ist die obere Konsole 5 an einer vom Halter 7 abgewandten Seite der Hakenaufnahme 15 mit einer Plattenaufnahme 20 ausgestattet, die komplementär zum Plattenabschnitt 19 geformt ist, derart, dass der Plattenabschnitt 19 von oben in die Plattenaufnahme 20 einführbar ist. Diese Plattenaufnahme 20 und der Plattenabschnitt 19 sind dabei so aufeinander abgestimmt, dass der in die Plattenaufnahme 20 eingeführte Plattenabschnitt 19 durch einen Formschluss in der Plattenaufnahme 20 quer zur Einführrichtung gesichert ist. Entsprechend der hier vorgestellten bevorzugten Ausführungsform können die Fixierplatte 14 und der Plattenabschnitt 19 deckungsgleich geformt sein. Dementsprechend sind auch die Plattenaufnahmen 16, 20 zweckmäßig deckungsgleich, insbesondere baugleich ausgestaltet. Bei der hier vorgestellten besonderen Ausführungsform sind die beiden Konsolen 5, 6 baugleich ausgestaltet, das heißt, die Konsolen 5, 6 sind Gleichteile. Bevorzugt wird dabei die untere Konsole 6 um 180° verdreht gegenüber der oberen Konsole 5 am Tragrahmen 3 montiert. Die verdrehte Montage der unteren Konsole 6 vermeidet eine Fehlmontage des Halters 7, nämlich ein versehentliches Einhängen des Hakens 13 an der Hakenaufnahme 15 der unteren Konsole 6. Zur Realisierung der Haltefunktion für die Fixierplatte 14 kann die untere Konsole 6 grundsätzlich auch identisch zur oberen Konsole 5 am Tragrahmen 3 montiert sein.

Der Halter 7 weist einen Steg 21 auf. Dieser erstreckt sich im montierten Zustand der Halteeinrichtung 2 vertikal. Er schließt sich nach unten an den Haken 13 an. Dabei kann er sich bevorzugt über die gesamte Länge des Halters 7 bzw. der Halterplatte 10 erstrecken. Der Steg 21 steht an einer den Konsolen 5, 6 zugewandten Seite von der Halterplatte 10 ab. An diesem Steg 21 ist die Fixierplatte 14 angeordnet. Dabei ist der Steg 21 so dimensioniert, dass die Fixierplatte 14 quer zur Längsrichtung des Stegs 21 über diesen übersteht und somit den Formschluss mit der jeweiligen Plattenaufnahme 16 ermöglicht. Um die Fixierplatte 14 in die Plattenaufnahme 16 der unteren Konsole 6 einführen zu können und um den Haken 13 an der Hakenaufnahme 15 der oberen Konsole 5 einhängen zu können, sind die Hakenaufnahme 15 und die Plattenaufnahme 16 jeweils mit einem Vertikalschlitz 22 ausgestattet, durch den der Steg 21 einführbar bzw. durchführbar ist. Zweckmäßig ist der Steg 21 außerdem so dimensioniert, dass die Fixierplatte 14 von der Halterplatte 10 den gleichen Abstand aufweist wie der Plattenabschnitt 19.

Bei der hier gezeigten bevorzugten Ausführungsform ist die Fixierplatte 14 am Halter 7, insbesondere an dessen Steg 21, lösbar befestigt. Hierzu ist der Halter 7 mit mehreren Befestigungsstellen 23 ausgestattet, mit deren Hilfe die Fixierplatte 14 am Halter 7 festlegbar ist. Diese Befestigungsstellen 23 besitzen unterschiedliche Abstände vom Haken 13, wodurch verschiedene Abstände zwischen Haken 13 und Fixierplatte 14 einstellbar sind. Die Befestigungsstellen 23 sind im Beispiel durch Schrauböffnungen gebildet, durch die von einer dem Anbauteil 1 zugewandten Seite Befestigungsschrauben bis zur Fixierplatte 14 einführbar sind. Im Beispiel sind diese Befestigungsstellen 23, insbesondere die Schrauböffnungen, am Steg 21 ausgebildet.

Bei einer anderen Ausführungsform kann anstelle einer separaten Fixierplatte 14, die mit unterschiedlichen Abständen zum Haken 13 am Halter 7 befestigbar ist, eine fest am Halter 7 angebrachte Fixierplatte vorgesehen sein, die sich entlang des Halters 7 zumindest entlang des Abstandsbereichs erstreckt, entlang dem die gezeigte separate Fixierplatte 14 verstellbar ist. Insbesondere kann sich eine derartige unverstellbare Fixierplatte durchgehend vom Haken 13 bis zur Position mit maximalem Abstand vom Haken 13 der hier gezeigten separaten Fixierplatte 14 erstrecken. Bei einer besonders vorteilhaften Ausführungsform kann der Plattenabschnitt 19 des Hakens 13 unmittelbar in die Fixierplatte 14 übergehen.

Die Fixierplatte 14 und der Plattenabschnitt 19 sind in der Einführrichtung angefast; eine entsprechende Einführfase ist dabei jeweils mit 24 bezeichnet.

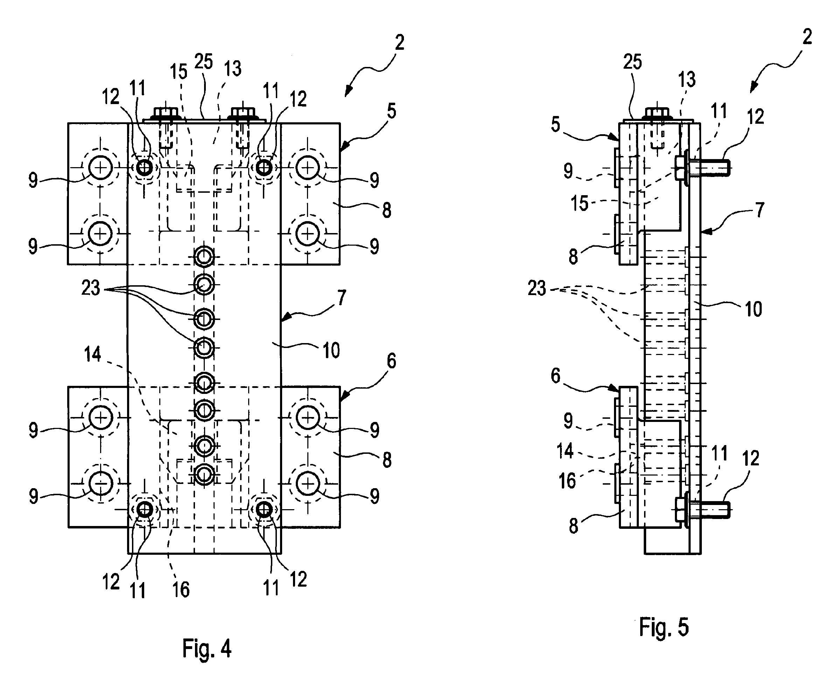

Entsprechend den Fig. 4 und 5 umfasst die Halteeinrichtung 2 außerdem eine Sicherungsplatte 25, die an der oberen Konsole 5 im Bereich der Hakenaufnahme 15 befestigt ist. Die Sicherungsplatte 25 übergreift den in die Hakenaufnahme 15 eingehängten Haken 13. Auf diese Weise ist der Haken 13 in der Hakenaufnahme 15 gesichert. Besonders vorteilhaft ist dabei eine Ausführungsform, bei welcher die Hakenaufnahme 15, der Haken 13 und die Sicherungsplatte 25 so aufeinander abgestimmt sind, dass die an der oberen Konsole 5 befestigte Sicherungsplatte 25 den Haken 13 in der Einhängrichtung in die Hakenaufnahme 15 vorspannt. Hierdurch können Relativbewegungen zwischen Halter 7 und oberer Konsole 5 und somit Relativbewegungen zwischen Anbauteil 1 und Tragrahmen 3 im Betrieb des Fahrzeugs vermieden werden.

## Patentansprüche

1. Halteeinrichtung zum Befestigen eines Anbauteils (1) an einem Tragrahmen (3) eines Fahrzeugs, insbesondere eines Nutzfahrzeugs,
- mit einer oberen Konsole (5), die im montierten Zustand der Halteeinrichtung (2) am Tragrahmen (3) befestigt ist,
- mit einer unteren Konsole (6), die im montierten Zustand der Halteeinrichtung (2) unterhalb der oberen Konsole (5) am Tragrahmen (3) befestigt ist,
- mit einem Halter (7), der im montierten Zustand der Halteeinrichtung (2) am Anbauteil (1) befestigt ist,
- wobei der Halter (7) einen Haken (13) aufweist,
- wobei die obere Konsole (5) eine komplementär zum Haken (13) geformte Hakenaufnahme (15) aufweist, in welche der Haken (13) von oben einhängbar ist,
- wobei der Halter (7) eine Fixierplatte (14) aufweist,
- wobei die untere Konsole (6) eine komplementär zur Fixierplatte (14) geformte Plattenaufnahme (16) aufweist, in welche die Fixierplatte (14) von oben einführbar ist,
- wobei zwischen der Plattenaufnahme (16) und der darin eingeführten Fixierplatte (14) ein Formschluss ausgebildet ist, der die Fixierplatte (14) quer zur Einführrichtung in der Plattenaufnahme (16) sichert,
**dadurch gekennzeichnet,**
- **dass** die obere Konsole (5) und die untere Konsole (6) als separate Bauteile ausgeführt sind,
- **dass** der Halter (7) einen Steg (21) aufweist, der sich im montierten Zustand der Halteeinrichtung (2) vertikal erstreckt, der sich nach unten an den Haken (13) anschließt und an dem die Fixierplatte (14) angeordnet ist.

2. Halteeinrichtung nach Anspruch 1,
**dadurch gekennzeichnet,**
**dass** der Haken (13) eine Einführschräge (17) aufweist, die den Haken (13) beim Einhängen in die Hakenaufnahme (15) gegen die obere Konsole (5) antreibt.

3. Halteeinrichtung nach Anspruch 2,
**dadurch gekennzeichnet,**
**dass** die Hakenaufnahme (15) eine zur Einführschräge (17) komplementäre Rampe (18) aufweist.

4. Halteeinrichtung nach einem der Ansprüche 1 bis 3,
**dadurch gekennzeichnet,**
- **dass** der Haken (13) an einem der oberen Konsole (5) zugewandten Ende einen Plattenabschnitt (19) aufweist,
- **dass** die obere Konsole (5) an einer vom Halter (7) abgewandten Seite der Hakenaufnahme (15) eine komplementär zum Plattenabschnitt (19) geformte Plattenaufnahme (20) aufweist, in welche der Plattenabschnitt (19) von oben einführbar ist,
- **dass** zwischen der Plattenaufnahme (20) und dem darin eingeführten Plattenabschnitt (19) ein Formschluss ausgebildet ist, der den Plattenabschnitt (19) quer zur Einführrichtung in der Plattenaufnahme (20) sichert.

5. Halteeinrichtung nach Anspruch 4,
**dadurch gekennzeichnet,**
**dass** die Fixierplatte (14) und der Plattenabschnitt (19) deckungsgleich geformt sind.

6. Halteeinrichtung einem der Ansprüche 1 bis 5,
**dadurch gekennzeichnet,**
**dass** die Hakenaufnahme (15) und/oder die Plattenaufnahme (16) der unteren Konsole (6) und/oder die Plattenaufnahme (20) der oberen Konsole (5) einen Vertikalschlitz (22) aufweist, durch den der Steg (21) einführbar und/oder durchführbar ist.

7. Halteeinrichtung nach einem der Ansprüche 1 bis 6,
**dadurch gekennzeichnet,**
**dass** die Fixierplatte (14) am Halter (7) befestigt ist, wobei der Halter (7) mehrere Befestigungsstellen (23) zum Befestigen der Fixierplatte (14) aufweist, die verschiedene Abstände zum Haken (13) aufweisen.

8. Halteeinrichtung nach Anspruch 7,
**dadurch gekennzeichnet,**
**dass** die Befestigungsstellen (23) am Steg (21) ausgebildet sind.

9. Halteeinrichtung nach einem der Ansprüche 1 bis 8,
**dadurch gekennzeichnet,**
**dass** die Fixierplatte (14) in der Einführrichtung angefast ist.

10. Halteeinrichtung zumindest nach Anspruch 4,
**dadurch gekennzeichnet,**
**dass** der Plattenabschnitt (19) in der Einführrichtung angefast ist.

11. Halteeinrichtung nach einem der Ansprüche 1 bis 10,
**dadurch gekennzeichnet,**
**dass** im montierten Zustand der Halteeinrichtung (2) eine Sicherungsplatte (25) im Bereich der Hakenaufnahme (15) an der oberen Konsole (5) befestigt ist, die den Haken (13) entgegen der Einhängrichtung übergreift.

12. Halteeinrichtung nach Anspruch 11,
**dadurch gekennzeichnet,**
**dass** die Sicherungsplatte (25) den Haken (13) in der Einhängrichtung vorspannt.

13. Halteeinrichtung nach einem der Ansprüche 1 bis 12,
**dadurch gekennzeichnet,**
**dass** die Konsolen (5, 6) als Gleichteile ausgestaltet sind.

14. Halteeinrichtung nach Anspruch 13,
**dadurch gekennzeichnet,**
**dass** die Konsolen (5, 6) im montierten Zustand der Halteeinrichtung (2) zueinander um 180° verdreht am Tragrahmen (3) befestigt sind.

## Claims

1. A holding device for fastening an attachment part (1) to a support frame (3) of a vehicle, in particular of a commercial vehicle,
- with an upper console (5), which in the assembled state of the holding device (2) is fastened to the support frame (3),
- with a lower console (6), which in the assembled state of the holding device (2) is fastened to the support frame (3) below the upper console (5),
- with a holder (7), which in the assembled state of the holding device (2) is fastened to the attachment part (1),
- wherein the holder (7) comprises a hook (13),
- wherein the upper console (5) comprises a hook receptacle (15) shaped complementarily to the hook (13), in which the hook (13) can be hooked in from above,
- wherein the holder (7) comprises a fixing plate (14),
- wherein the lower console (6) has a plate receptacle (16) shaped complementarily to the fixing plate (14), into which the fixing plate (14) can be introduced from above,
- wherein between the plate receptacle (16) and the fixing plate (14) introduced therein a positive connection is formed, which secures the fixing plate (14) in the plate receptacle (16) transversely to the introduction direction,
**characterized in that**
- the upper console (5) and the lower console (6) are embodied as separate components,
- the holder (7) comprises a web (21) which in the assembled state of the holding device (2) extends vertically, which follows the hook (13) and on which the fixing plate (14) is arranged.

2. The holding device according to Claim 1,
**characterized in that**
the hook (13) comprises an insertion slope (17), which drives the hook (13) against the upper console (5) during the hooking-in into the hook receptacle (15).

3. The holding device according to Claim 2,
**characterized in that**
the hook receptacle (15) comprises a ramp (18) that is complementary to the insertion slope (17).

4. The holding device according to any one of the Claims 1 to 3,
**characterized in that**
- the hook (13), at an end facing the upper console (5), comprises a plate section (19),
- the upper console (5) on a side of the hook receptacle (15) facing away from the holder (7) comprises a plate receptacle (20) shaped complementarily to the plate section (19), in which the plate section (19) can be inserted from above,
- between the plate receptacle (20) and the plate section (19) inserted therein a positive connection is formed, which secures the plate section (19) in the plate receptacle (20) transversely to the insertion direction.

5. The holding device according to Claim 4,
**characterized in that**
the fixing plate (14) and the plate section (16) are shaped congruently.

6. The holding device according to any one of the Claims 1 to 5,
**characterized in that**
the hook receptacle (15) and/or the plate receptacle (16) of the lower console (6) and/or the plate receptacle (20) of the upper console (5) comprises a vertical slit (22) through which the web (21) can be inserted and/or guided through.

7. The holding device according to any one of the Claims 1 to 6,
**characterized in that**
the fixing plate (14) is fastened to the holder (7), wherein the holder (7) comprises a plurality of fastening points (23) for fastening the fixing plate (14), which fastening points have different distances to the hook (13).

8. The holding device according to Claim 7,
**characterized in that**
the fastening points (23) are formed on the web (21).

9. The holding device according to any one of the Claims 1 to 8,
**characterized in that**
the fixing plate (14) is chamfered in the insertion direction.

10. The holding device according to Claim 4,
**characterized in that**
the plate section (19) is chamfered in the insertion direction.

11. The holding device according to any one of the Claims 1 to 10,
**characterized in that**
in the assembled state of the holding device (2) a locking plate (25) is fastened to the upper console (5) in the region of the hook receptacle (15), which engages over the hook (13) against the hooking-in direction.

12. The holding device according to Claim 11,
**characterized in that**
the locking plate (25) preloads the hook (13) in the hooking-in direction.

13. The holding device according to any one of the Claims 1 to 12,
**characterized in that**
the consoles (5, 6) are configured as identical parts.

14. The holding device according to Claim 13,
**characterized in that**
the consoles (5, 6) in the assembled state of the holding device (2) are fastened to the support frame (3) rotated by 180° to each other.

## Revendications

1. Dispositif de retenue pour la fixation d'une partie rapportée (1) sur un cadre porteur (3) d'un véhicule, en particulier d'un véhicule utilitaire, comprenant
- une console (5) supérieure, qui est fixée sur le cadre porteur (3) lorsque le dispositif de retenue (2) est monté,
- une console (6) inférieure, qui est fixée au-dessous de la console (5) supérieure sur le cadre porteur (3) lorsque le dispositif de retenue (2) est monté,
- un support (7), qui est fixé sur la partie rapportée (1) lorsque le dispositif de retenue (2) est monté,
- le support (7) présentant un crochet (13),
- la console (5) supérieure présentant un logement de crochet (15) formé de façon complémentaire par rapport au crochet (13), logement dans lequel le crochet (13) peut être accroché par le haut,
- le support (7) présentant une plaque de fixation (14),
- la console (6) inférieure présentant un logement de plaque (16) formé de façon complémentaire par rapport à la plaque de fixation (14), logement dans lequel la plaque de fixation (14) peut être introduite par en haut,
- une liaison mécanique par conjugaison de formes, qui bloque la plaque de fixation (14) transversalement an sens d'introduction dans le logement de plaque (16), étant conçue entre le logement de plaque (16) et la plaque de fixation (14) introduite dedans,
**caractérisé**
- **en ce que** la console (5) supérieure et la console (6) inférieure sont réalisées sous forme de composants séparés,
- **en ce que** le support (7) présente une entretoise (21), qui s'étend verticalement lorsque le dispositif de retenue (2) est monté, se raccorde vers le bas au crochet (13) et sur lequel la plaque de fixation (14) est disposée.

2. Dispositif de retenue selon la revendication 1,
**caractérisé en ce que**
le crochet (13) présente un chanfrein d'introduction (17), qui entraîne le crochet (13) lors de l'accrochage dans le logement de crochet (15) vers la console (5) supérieure.

3. Dispositif de retenue selon la revendication 2,
**caractérisé en ce que**
le logement de crochet (15) présente une rampe (18) complémentaire par rapport au chanfrein d'introduction (17) .

4. Dispositif de retenue selon l'une des revendications 1 à 3,
**caractérisé en ce que**
- le crochet (13) présente une partie de plaque (19) sur une extrémité associée à la console (5) supérieure,
- la console (5) supérieure présente sur un côté, opposé au support (7), du logement de crochet (15) un logement de plaque (20) formé de façon complémentaire à la partie de plaque (19), logement dans lequel la partie de plaque (19) peut être introduite par le haut,
- une liaison mécanique par conjugaison de formes, qui bloque la partie de plaque (19) transversalement au sens d'introduction dans le logement de plaque (20), est conçue entre le logement de plaque (20) et la partie de plaque (19) introduite dedans.

5. Dispositif de retenue selon la revendication 4,
**caractérisé en ce que**
la plaque de fixation (14) et la partie de plaque (19) sont formées de façon coïncidente.

6. Dispositif de retenue selon l'une des revendications 1 à 5,
**caractérisé en ce que**
le logement de crochet (15) et/ou le logement de plaque (16) de la console (6) inférieure et/ou le logement de plaque (20) de la console (5) supérieure présente une fente verticale (22), par laquelle l'entretoise (21) peut être introduite et/ou passée.

7. Dispositif de retenue selon l'une des revendications 1 à 6,
**caractérisé en ce que**
la plaque de fixation (14) est fixée sur le support (7), le support (7) présentant plusieurs points de fixation (23) pour la fixation de la plaque de fixation (14), qui présentent différents espacements par rapport au crochet (13).

8. Dispositif de retenue selon la revendication 7,
**caractérisé en ce que**
les points de fixation (23) sont conçus sur l'entretoise (21).

9. Dispositif de retenue selon l'une des revendications 1 à 8,
**caractérisé en ce que**
la plaque de fixation (14) est chanfreinée dans le sens d'introduction.

10. Dispositif de retenue au moins selon la revendication 4,
**caractérisé en ce que**
la partie de plaque (19) est chanfreinée dans le sens d'introduction.

11. Dispositif de retenue selon l'une des revendications 1 à 10,
**caractérisé en ce que**,
lorsque le dispositif de retenue (2) est monté, une plaque de blocage (25) est fixée dans la zone du logement de crochet (15) sur la console (5) supérieure, qui recouvre le crochet (13) dans le sens contraire au sens d'accrochage.

12. Dispositif de retenue selon la revendication 11,
**caractérisé en ce que**
la plaque de blocage (25) précontraint le crochet (13) dans le sens d'accrochage.

13. Dispositif de retenue selon l'une des revendications 1 à 12,
**caractérisé en ce que**
les consoles (5, 6) sont conçues comme des pièces identiques.

14. Dispositif de retenue selon la revendication 13,
**caractérisé en ce que**
les consoles (5, 6) sont fixées sur le cadre porteur (3) de façon à pouvoir tourner de 180° les unes par rapport aux autres lorsque le dispositif de retenue (2) est monté.
